# EUROPEAN PATENT APPLICATION

(11) **EP 4 523 889 A1**
(43) Date of publication of application: **19.03.2025**
(21) Application number: 23803200.7
(22) Date of filing: 08.02.2023
(51) Int. Cl.: B29C 64/20, B29C 64/165, B33Y 30/00

(54) **THREE-DIMENSIONAL SHAPING DEVICE**

(30) Priority: 13.05.2022 JP 2022079227
(71) Applicant: Roland DG Corporation, Hamamatsu-shi, Shizuoka 431-2103 (JP)
(72) Inventor: IWASE, Fumiyoshi, Hamamatsu-shi, Shizuoka 431-2103 (JP)
(74) Representative: Grünecker Patent- und Rechtsanwälte PartG mbB
(86) International application number: PCT/JP2023/004133
(87) International publication number: WO 2023/218709

(57) **Abstract**

To recover a portion, of a powdery material, that is caused to flow outside while the powdery material is being spread in a printing space. A three-dimensional printing device 100 includes a housing 10; a printing tank 20 including a printing space 20A, in which a powdery material 90 is to be accommodated and a three-dimensional printing object 92 is to be formed, the printing tank 20 being provided in the housing 10; a supply tank 30 provided in the housing 10 so as to be located to the front of the printing tank 20, the supply tank 30 including a storage space 30A, in which the powdery material 90, to be supplied to the printing space 20A, is to be stored; a spreading member 50 transporting the powdery material 90 from the supply tank 30 to the printing tank 20 and spreading the powdery material 90 in the printing space 20A; and first receiving members 121 detachably provided on the housing 10 so as to be located to the left of, and to the right of, the supply tank 30 and located below a top end 30T of the supply tank 30, the first receiving members 121 receiving a portion, of the powdery material 90, that is caused to flow outside from the supply tank 30 while the spreading member 50 is transporting the powdery material 90.

## Description

### Technical Field

The present invention relates to a three-dimensional printing device.

This application claims the benefit of priority to Japanese Patent Application No. 2022-79227 filed on May 13, 2022. The entire contents of this application are hereby incorporated herein by reference.

### Background Art

As shown in, for example, Patent Literature 1, three-dimensional printing devices using a powdery material are known. Such a three-dimensional printing device includes a supply tank in which the powdery material is stored, and a printing tank in which a three-dimensional printing object is formed. The powdery material in the supply tank is supplied from the supply tank to the printing tank by a spreading member, and is spread in the printing tank. A powdery material layer formed as a result of the powdery material being spread in the printing tank has a curing liquid discharged thereto, and as a result, a cured layer having a desired cross-sectional shape is formed. This operation is repeated to stack such cured layers, and as a result, a three-dimensional printing object is formed.

### Citation List

### Patent Literature

Patent Literature 1: Japanese Patent Application Publication No. 2020-82488

### Summary of Invention

### Technical Problem

In a process of moving the spreading member in a first direction to transfer the powdery material from the supply tank to the printing tank, the powdery material that is to be transferred may possibly flow outside (e.g., in a second direction perpendicular to the first direction as seen in a plan view) from the supply tank. A portion, of the powdery material, that is caused to flow outside is recovered by a user. If the user uses, for example, a dust collector in an attempt to recover the powdery material, particles of the powdery material are separated from each other in the case where the powdery material is of a certain type, resulting in the powdery material not being reusable. Therefore, the user needs to recover the powdery material manually, which is burdensome for the user.

The present invention, made in light of such a point, has an object of providing a three-dimensional printing device capable of easily recovering a portion, of a powdery material, that is caused to flow outside while the powdery material is being spread in a printing space.

### Solution to Problem

A three-dimensional printing device according to the present invention forms a three-dimensional printing object by curing a powdery material to form a cured layer and sequentially stacking such cured layers. The three-dimensional printing device includes a housing; a printing tank including a printing space in which the powdery material is to be accommodated and the three-dimensional printing object is to be formed, the printing tank being provided in the housing; a supply tank provided in the housing so as to be located on one side in a first direction with respect to the printing tank, the supply tank including a storage space in which the powdery material, to be supplied to the printing space, is to be stored; a spreading member transporting the powdery material from the supply tank to the printing tank and spreading the powdery material in the printing space; and first receiving members detachably provided on the housing so as to be located on one side and on the other side, with respect to the supply tank, in a second direction perpendicular to the first direction as seen in a plan view, and located below a top end of the supply tank, the first receiving members receiving a portion, of the powdery material, that is caused to flow outside from the supply tank while the spreading member is transporting the powdery material.

With the three-dimensional printing device according to this embodiment, the first receiving members provided on one side and on the other side in the second direction with respect to the supply tank are located below the top end of the supply tank. Therefore, even if the powdery material flows outside from the supply tank (e.g., to the one side or to the other side in the second direction) while the spreading member is transporting the powdery material, a portion, of the powdery material, that is caused to flow outside is received by the first receiving members. In addition, the first receiving members are detachably provided on the housing. Therefore, when a certain amount of the powdery material accumulates in the first receiving members, the first receiving members may be detached from the housing to return the powdery material to the storage space of the supply tank. In this manner, the powdery material may be reused.

### Advantageous Effects of Invention

The present invention provides a three-dimensional printing device capable of easily recovering a portion, of a powdery material, that is caused to flow outside while the powdery material is being spread in a printing space.

### Brief Description of Drawings

FIG. 1 is a perspective view of a three-dimensional printing device according to one embodiment.
FIG. 2 is a plan view of the three-dimensional printing device according to one embodiment.
FIG. 3 is a cross-sectional view taken along line III-III in FIG. 2.
FIG. 4 is a cross-sectional view taken along line IV-IV in FIG. 2.
FIG. 5 is a cross-sectional view taken along line V-V in FIG. 2.
FIG. 6 is a cross-sectional view taken along line VI-VI in FIG. 2.
FIG. 7 is a cross-sectional view showing a state where a spreading member is in contact with a cleaning member.
FIG. 8 is a block diagram of a control system of the three-dimensional printing device according to one embodiment.

### Description of Embodiments

Hereinafter, embodiments of a three-dimensional printing device according to the present invention will be described with reference to the drawings. Note that the embodiments described herein are not intended to specifically limit the present invention, needless to say. Elements and portions having the same functions are denoted by the same reference signs, and overlapping descriptions will be omitted or simplified as appropriate.

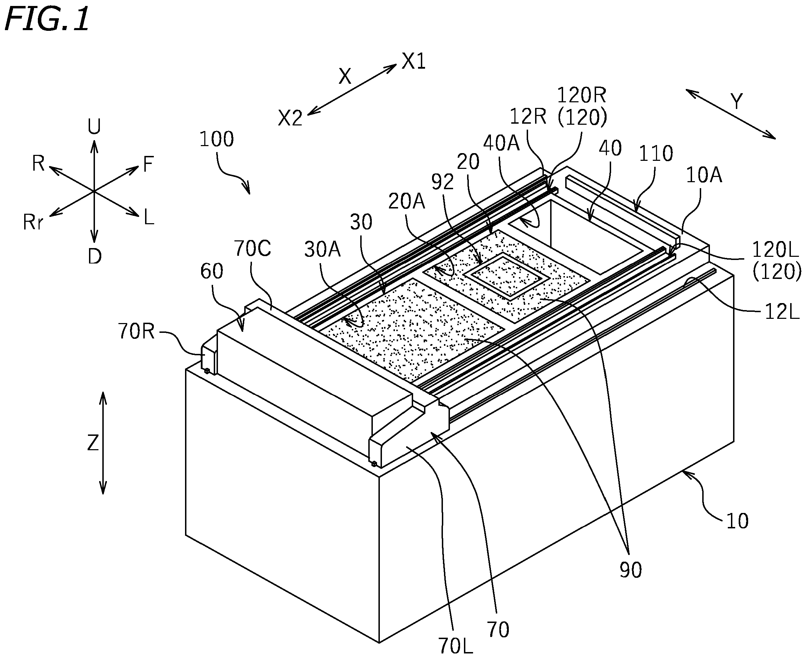

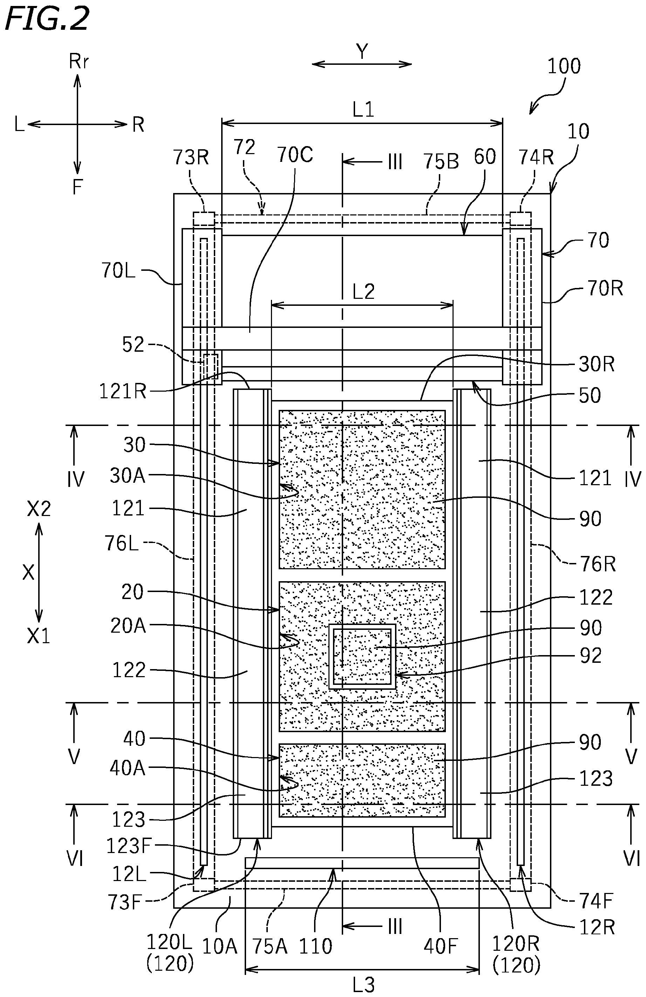

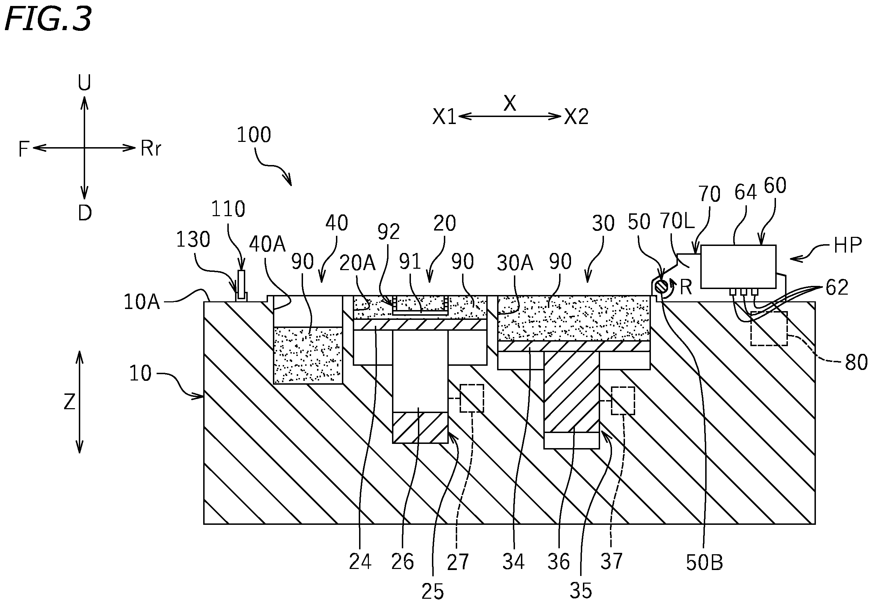

FIG. 1 is a perspective view of a three-dimensional printing device 100 according to this embodiment. FIG. 2 is a plan view of the three-dimensional printing device 100 according to this embodiment. In the drawings, letter F represents "front", and letter Rr represents "rear". In this embodiment, left, right, up and down in a state where the three-dimensional printing device 100 is seen from the direction of F are respectively left, right, up and down of the three-dimensional printing device 100. Herein, letters L, R, U and D in the drawings respectively represent left, right, up and down. In this embodiment, letters X, Y and Z respectively represent "front-rear", "left-right" and "up-down" directions. The front-rear direction X is a scanning direction and corresponds to a "first direction" of the present invention. The left-right direction Y corresponds to a "second direction" of the present invention. The left-right direction Y is perpendicular to the scanning direction X as seen in a plan view. The up-down direction Z matches a stacking direction of cured layers 91 (see FIG. 3) in three-dimensional printing. The rear side of the three-dimensional printing device 100 will be referred to as an "upstream side", and the front side of the three-dimensional printing device 100 will be referred to as a "downstream side". The upstream side corresponds to "one side in the first direction" of the present invention, and the downstream side corresponds to "the other side in the first direction" of the present invention. In this embodiment, a direction from the upstream side toward the downstream side will be referred to as a "forth direction X1", and a direction from the downstream side toward the upstream side will be referred to as a "back direction X2". Note that these directions are defined for the convenience of description, and do not limit the manner of installation of the three-dimensional printing device 100 in any way.

As shown in FIG. 1, the three-dimensional printing device 100 cures a powdery material 90 with a curing liquid to form a cured layer 91 (see FIG. 3) and stacks such cured layers 91 in the up-down direction Z sequentially and integrally to form a three-dimensional printing object 92. In this embodiment, in the three-dimensional printing device 100, the curing liquid is discharged toward the powdery material 90, based on a cross-sectional image showing a desired cross-sectional shape of the three-dimensional printing object 92. As a result, the powdery material 90 is cured, and thus the cured layer 91 in accordance with the cross-sectional image is formed. Such cured layers 91 are sequentially stacked to form the desired three-dimensional printing object 92.

Herein, the term "cross-sectional shape" refers to a shape of a cross-section obtained as a result of the three-dimensional printing object 92, which is to be formed, being sliced in a predetermined direction (e.g., a horizontal direction) at a predetermined thickness (e.g., 0.1 mm; the "predetermined thickness" does not indicate that all the portions obtained by the slicing have the same thickness).

The powdery material 90 is not limited in terms of the composition, the form or the like, and may contain powder formed of any of various materials including inorganic materials, metal materials, resin materials and the like. Materials usable to form the powdery material 90 include, for example, inorganic materials such as alumina, silica, titania, zirconia and the like; metal materials including iron, aluminum, titanium, an alloy thereof (typically, stainless steel, titanium alloy, aluminum alloy) and the like; water-soluble resin materials including polyvinylalcohol (PVA), polyvinylpyrrolidone (PVP), water-soluble acrylic reins, water-soluble urethane resins, water-soluble polyamide and the like; gypsum hemihydrate (α-type calcined gypsum, β-type calcined gypsum); apatite; salt; starch; plastics; and the like. The powdery material 90 may be formed of one of the above-listed materials or a combination of two or more of the above-listed materials. The powdery material 90 is, for example, a mixed powder containing a first powder having a first average grain size D1 [µm] and a second powder having a second average grain size D2 [µm]. The second average grain size D2 is shorter than the first average grain size D1. The first average grain size D1 is about five times to about ten times the second average grain size D2. The first powder is, for example, an inorganic material, and the second powder is, for example, a water-soluble resin material. The "average grain size" is defined as a grain size at an accumulated value of 50% in a grain size distribution measured by a grain size distribution meter based on the laser scattering-diffraction method, that is, a 50% volume-average grain size, unless otherwise specified.

As the curing liquid, any material capable of causing particles of the powdery material 90 to adhere to each other is usable with no specific limitation. As the curing liquid, any liquid (encompassing any viscous material) capable of binding particles that form the powdery material 90 to each other is usable in accordance with the type of the powdery material 90. Examples of liquid usable as the curing liquid include water, wax, binders and the like. In the case where the powdery material 90 contains a water-soluble resin material, water, for example, is used as the curing liquid.

As shown in FIG. 1, the three-dimensional printing device 100 includes a housing 10, a printing tank 20, a supply tank 30, a recovery tank 40, a spreading member 50 (see FIG. 2), a head unit 60, a movable body 70, a controller 80 (see FIG. 3), a cleaning member 110, and receiving members 120.

As shown in FIG. 1, the housing 10 is an external casing of the three-dimensional printing device 100 and has a shape longer in the scanning direction X. The housing 10 is box-shaped. The housing 10 is to accommodate the formed three-dimensional printing object 92. The printing tank 20, the supply tank 30 and the recovery tank 40 are provided in the housing 10. A top surface 10A of the housing 10 is flat, and the printing tank 20, the supply tank 30 and the recovery tank 40 are recessed from the top surface 10A and arranged in a line independently from each other. The printing tank 20, the supply tank 30 and the recovery tank 40 are arranged in the scanning direction X. The housing 10 supports the movable body 70.

As shown in FIG. 1, the printing tank 20 is provided in the housing 10. The printing tank 20 includes a printing space 20A. The printing space 20A is to accommodate the powdery material 90 supplied from the supply tank 30. In the printing space 20A, the curing liquid is discharged toward the powdery material 90 and thus the three-dimensional printing object 92 is formed.

As shown in FIG. 3, the three-dimensional printing device 100 includes a first table 24. The first table 24 is located in the printing tank 20. A space enclosed by the printing tank 20 and the first table 24 is the printing space 20A. On the first table 24, the powdery material 90 is to be placed. On the first table 24, the three-dimensional printing object 92 is to be formed. The first table 24 is movable in the up-down direction Z. The first table 24 has, for example, a rectangular shape as seen in a plan view.

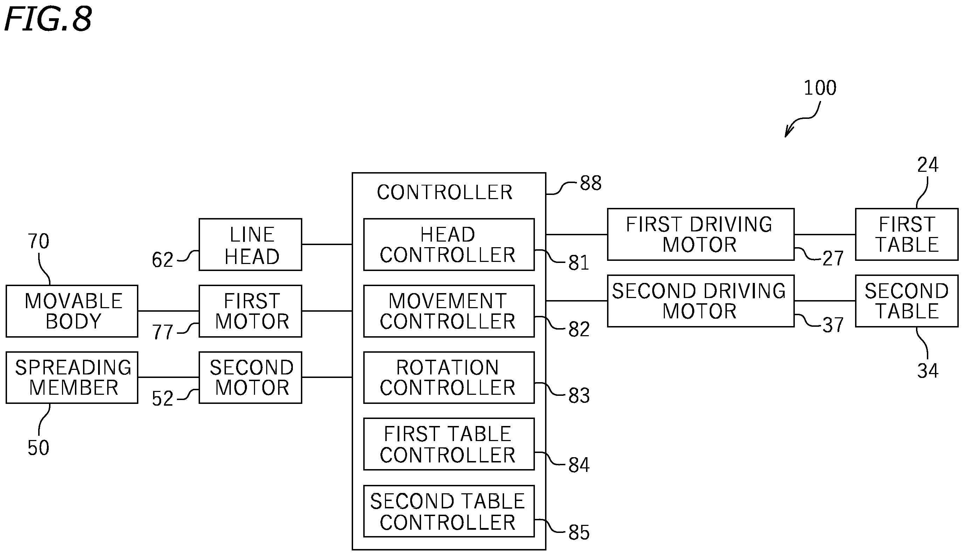

As shown in FIG. 1, the three-dimensional printing device 100 includes a first elevation device 25. The first elevation device 25 raises and lowers the first table 24. That is, the first elevation device 25 moves the first table 24 in the up-down direction Z. The first elevation device 25 is provided in the housing 10. There is no specific limitation on the configuration of the first elevation device 25. The first elevation device 25 includes a first support member 26, a first driving motor 27 (see also FIG. 8), and a ball screw (not shown). The first support member 26 is connected with a bottom surface of the first table 24. The first support member 26 supports the first table 24 from below. The first support member 26 extends in the up-down direction Z. The first support member 26 is connected with the first driving motor 27 via the ball screw. The first moving motor 27 is driven to move the first support member 26 in the up-down direction Z. As a result, the first table 24 is moved in the up-down direction Z. The first moving motor 27 is controlled by the controller 80. That is, the first elevation device 25 is controlled by the controller 80.

As shown in FIG. 1, the supply tank 30 is provided in the housing 10. The supply tank 30 is located to the rear of the printing tank 20. The supply tank 30 includes a storage space 30A. The storage space 30A is to accommodate the powdery material 90 to be supplied to the printing tank 20. A maximum possible capacity of the storage space 30A is larger than a maximum possible capacity of the printing space 20A. That is, an amount, of the powdery material 90, that may be accommodated in the storage space 30A is larger than an amount, of the powdery material 90, that may be accommodated in the printing space 20A.

As shown in FIG. 3, the three-dimensional printing device 100 includes a second table 34. The second table 34 is located in the supply tank 30. A space enclosed by the supply tank 30 and the second table 34 is the storage space 30A. On the second table 34, the powdery material 90 is to be placed. The second table 34 is movable in the up-down direction Z. The second table 34 has, for example, a rectangular shape as seen in a plan view.

As shown in FIG. 3, the three-dimensional printing device 100 includes a second elevation device 35. The second elevation device 35 raises and lowers the second table 34. That is, the second elevation device 35 moves the second table 34 in the up-down direction Z. The second elevation device 35 is provided in the housing 10. There is no specific limitation on the configuration of the second elevation device 35. The second elevation device 35 includes a second support member 36, a second driving motor 37 (see also FIG. 8), and a ball screw (not shown). The second support member 36 is connected with a bottom surface of the second table 34. The second support member 36 supports the second table 34 from below. The second support member 36 extends in the up-down direction Z. The second support member 36 is connected with the second driving motor 37 via the ball screw. The second moving motor 37 is driven to move the second support member 36 in the up-down direction Z. As a result, the second table 34 is moved in the up-down direction Z. The second moving motor 37 is controlled by the controller 80. That is, the second elevation device 35 is controlled by the controller 80.

As shown in FIG. 1, the recovery tank 40 is provided in the housing 10. The recovery tank 40 is located to the front of the printing tank 20. The recovery tank 40 includes a recovery space 40A. A portion, of the powdery material 90, that is left without being spread in the printing space 20A is recovered to the recovery space 40A. A maximum possible capacity of the recovery space 40A is smaller than a maximum possible capacity of the printing space 20A. That is, an amount, of the powdery material 90, that may be recovered to the recovery space 40A is smaller than an amount, of the powdery material 90, that may be accommodated in the printing space 20A.

As shown in FIG. 2, a left guide rail 12L and a right guide rail 12R are provided on the housing 10. The left guide rail 12L and the right guide rail 12R guide a movement of the movable body 70 in the scanning direction X. The left guide rail 12L and a right guide rail 12R extend in the scanning direction X. The left guide rail 12L is located to the left of the printing tank 20. The right guide rail 12R is located to the right of the printing tank 20. The printing tank 20, the supply tank 30 and the recovery tank 40 are provided between the left guide rail 12L and the right guide rail 12R. A front end of the left guide rail 12L and a front end of the right guide rail 12R are located to the front of the recovery tank 40. A rear end of the left guide rail 12L and a rear end of the right guide rail 12R are located to the rear of the supply tank 30. In this embodiment, the left guide rail 12L and the right guide rail 12R are provided. There is no specific limitation on the positions and the number of the guide rails.

As shown in FIG. 1, the movable body 70 is located on the housing 10. The movable body 70 is in slidable engagement with the left guide rail 12L and the right guide rail 12R. The movable body 70 is movable in the scanning direction X along the left guide rail 12L and the right guide rail 12R. As shown in FIG. 2, the movable body 70 includes a left leg portion 70L in engagement with the left guide rail 12L, a right leg portion 70R in engagement with the right guide rail 12R, and a coupling portion 70C coupling a top end of the left leg portion 70L and a top end of the right leg portion 70R to each other. The left leg portion 70L and the right leg portion 70R extend in the up-down direction Z. The coupling portion 70C extends in the left-right direction Y. The movable body 70 is moved by a moving mechanism 72 described below, in a reciprocating manner in the scanning direction X along the left guide rail 12L and the right guide rail 12R. The movable body 70 is an example of movable device.

As shown in FIG. 2, the three-dimensional printing device 100 includes the moving mechanism 72. The moving mechanism 72 moves the movable body 70 in the scanning direction X with respect to the housing 10. The moving mechanism 72 is located in the housing 10. The moving mechanism 72 includes a pulley 73F located at the front end of the left guide rail 12L, a pulley 73R located at the rear end of the left guide rail 12L, a pulley 74F located at the front end of the right guide rail 12R, a pulley 74R located at the rear end of the right guide rail 12R, a coupling rod 75A coupling the pulley 73F and the pulley 74F to each other, a coupling rod 75B coupling the pulley 73R and the pulley 74R to each other, a left belt 76L wound along the pulley 73F and the pulley 73R, a right belt 76R wound along the pulley 74F and the pulley 74R, and a first motor 77 (see FIG. 8) rotating the coupling rod 75A. The first motor 77 may rotate the coupling rod 75B. The left belt 76L is secured to the left leg portion 70L. The right belt 76R is secured to the right leg portion 70R. The first motor 77 is controlled by the controller 80. That is, the moving mechanism 72 is controlled by the controller 80. When the first motor 77 is driven, the coupling rod 75A is rotated to run the left belt 76L and the right belt 76R. As a result, the movable body 70 moves in a reciprocating manner in the scanning direction X along the left guide rail 12L and the right guide rail 12R. For the convenience of description, the moving mechanism 72 is shown only in FIG. 2, and is omitted in the other figures.

As shown in FIG. 3, in this embodiment, the head unit 60 includes three line heads 62 arranged in the scanning direction X and a case 64 accommodating the line heads 62. The line heads 62 each discharge the curing liquid toward the powdery material 90 accommodated in the printing space 20A. The line heads 62 each include a plurality of nozzles (not shown) through which the curing liquid is to be discharged. The plurality of nozzles are arranged in the left-right direction Y. There is no specific limitation on the mechanism of discharging the curing liquid by the line heads 62, and the mechanism may be, for example, of an inkjet system. The line heads 62 are located on the housing 10 so as to be located above the printing tank 20. The head unit 60 is secured to the movable body 70. That is, the line heads 62 do not move in the left-right direction Y. Bottom ends of the line heads 62 are located below a bottom surface of the case 64. The discharge of the curing liquid through the nozzles of the line heads 62 is controlled by the controller 80.

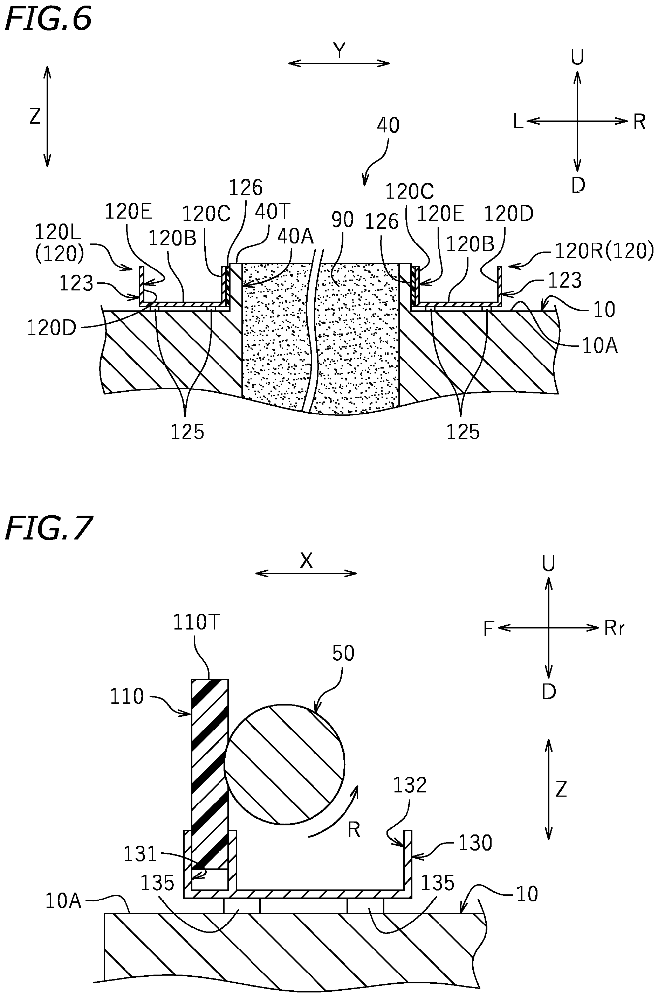

As shown in FIG. 3, the spreading member 50 is located above the housing 10. A bottom end 50B of the spreading member 50 is located slightly above the housing 10 such that a predetermined clearance (gap) is formed between the printing tank 20/the supply tank 30/the recovery tank 40 and the spreading member 50 in the up-down direction Z. The spreading member 50 is located to the front of the line heads 62. The spreading member 50 is rotatably supported by the movable body 70. The spreading member 50 is rotatably supported by, for example, the left leg portion 70L and the right leg portion 70R. The spreading member 50 has a lengthy cylindrical shape. The spreading member 50 extends in the left-right direction Y. The spreading member 50 is located such that a rotation axis thereof is parallel to the left-right direction Y. As shown in FIG. 2, a length L1 of the spreading member 50 in the left-right direction Y is longer than a length L2 of the printing tank 20 in the left-right direction Y. The spreading member 50 transports the powdery material 90 placed on the second table 34 (see FIG. 3) to the printing tank 20. The spreading member 50 transports the powdery material 90 from the supply tank 30 to the printing tank 20. The spreading member 50 transports the powdery material 90 from the upstream side to the downstream side (in the forth direction X1). The spreading member 50 spreads the powdery material 90 in the printing space 20A. The spreading member 50 flattens a surface of the powdery material 90 supplied onto the first table 24 (see FIG. 3) to form a uniform powdery material layer. The three-dimensional printing device 100 includes a second motor 52. The second motor 52 is provided in the movable body 70. The second motor 52 is controlled by the controller 80. The second motor 52 is driven, and as a result, as shown in FIG. 3, the spreading member 50 rotates in the direction of an arrow R in FIG. 3 (counterclockwise as seen from the right to the left). In this embodiment, the spreading member 50 moves in a reciprocating manner (i.e., in the force direction X1 and the back direction X2) in the scanning direction X along with the movement of the movable body 70. The spreading member 50 moves between a home position HP, at which the spreading member 50 waits except while the line heads 62 are performing the printing, and a cleaning position CP (see FIG. 7), at which the spreading member 50 is in contact with the cleaning member 110. While the spreading member 50 is transporting the powdery material 90 (that is, while the spreading member 50 is moving in the forth direction X1), both of two ends of the spreading member 50 (a left end and a right end thereof) pass above the receiving members 120 (more specifically, first receiving members 121, second receiving members 122 and third receiving members 123) described below. While moving in the scanning direction X in a reciprocating manner, the spreading member 50 rotates in the direction of the arrow R in FIG. 3. The spreading member 50 rotates in contact with the cleaning member 110. The second motor 52 is an example of driving source.

The receiving members 120 each receive the powdery material 90. The receiving members 120 are detachably provided on the housing 10. As shown in FIG. 1, the receiving members 120 include a left receiving member 120L located to the left of the printing tank 20, the supply tank 30 and the recovery tank 40, and a right receiving member 120R located to the right of the printing tank 20, the supply tank 30 and the recovery tank 40. The left receiving member 120L and the right receiving member 120R have the same shape as each other. As shown in FIG. 2, the receiving members 120 include the first receiving members 121 located to the left of, and to the right of, the supply tank 30, the second receiving members 122 located to the left of, and to the right of, the printing tank 20, and the third receiving members 123 located to the left of, and to the right of, the recovery tank 40. The first receiving members 121, the second receiving members 122 and the third receiving members 123 have the same shape as each other. In this embodiment, each of the first receiving members 121, one of the second receiving members 122 corresponding to the each first receiving member 121, and one of the third receiving members 123 corresponding to the each first receiving member 121 are formed integrally together.

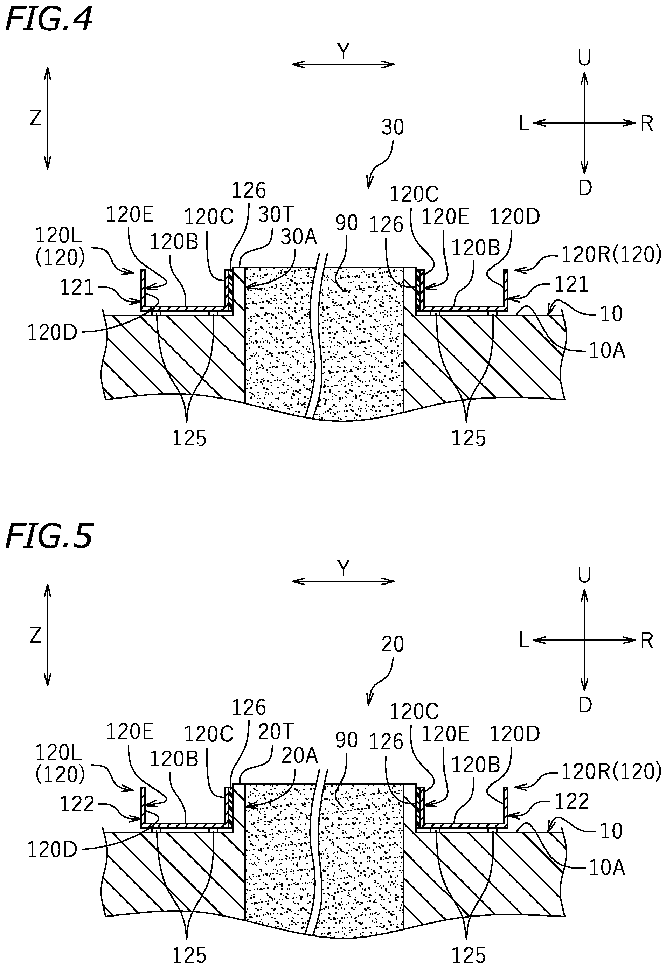

As shown in FIG. 4, the receiving members 120 each include a bottom wall 120B, a first side wall 120C extending upward from an end, of the bottom wall 120B, on the side of the supply tank 30, and a second side wall 120D extending upward from an end, of the bottom wall 120B, on the side opposite to the supply tank 30. The receiving members 120 each have a substantially U-shaped cross-section. The powdery material 90 is to be accommodated in a space 120E defined by the bottom wall 120B, the first side wall 120C and the second side wall 120D. A gap burying member 126 is provided on the first side wall 120C. The gap burying member 126 is elastically deformable. The gap burying member 126 is, for example, a sponge. The gap burying member 126 is located between the supply tank 30 and each of the first receiving members 121 to bury a gap between the supply tank 30 and the each first receiving member 121. The gap burying member 126 is located between the printing tank 20 and each of the second receiving members 122 to bury a gap between the printing tank 20 and the each second receiving member 122. The gap burying member 126 is located between the recovery tank 40 and each of the third receiving members 123 to bury a gap between the recovery tank 40 and the each third receiving member 123. Magnets 125 are provided on a rear surface of the bottom wall 120B. The receiving members 120 are each provided on the housing 10 by use of a magnetic force. That is, the first receiving members 121, the second receiving members 122 and the third receiving members 123 are provided on the housing 10 by use of a magnetic force. Therefore, the first receiving members 121, the second receiving members 122 and the third receiving members 123 (i.e., the receiving members 120) are easily detachable from the housing 10.

As shown in FIG. 4, the first receiving members 121 are located below a top end 30T of the supply tank 30. The first receiving members 121 are detachably provided on the housing 10. The first receiving members 121 are detachably provided on the top surface 10A of the housing 10. The first receiving members 121 receive a portion, of the powdery material 90, that is caused to flow outside from the supply tank 30 while the spreading member 50 is transporting the powdery material 90. As shown in FIG. 2, a rear end 121R of each first receiving member 121 is located to the rear of a rear end 30R of the supply tank 30. As shown in FIG. 5, the second receiving members 122 are located below a top end 20T of the printing tank 20. The second receiving members 122 are detachably provided on the housing 10. The second receiving members 122 are detachably provided on the top surface 10A of the housing 10. The second receiving members 122 receive a portion, of the powdery material 90, that is caused to flow outside from the printing tank 20 while the spreading member 50 is transporting the powdery material 90. As shown in FIG. 6, the third receiving members 123 are located below a top end of the recovery tank 40. The third receiving members 123 are detachably provided on the housing 10. The third receiving members 123 are detachably provided on the top surface 10A of the housing 10. The third receiving members 123 receive a portion, of the powdery material 90, that is caused to flow outside from the recovery tank 40 while the spreading member 50 is transporting the powdery material 90. As shown in FIG. 2, a front end 123F of each third receiving member 123 is located to the front of a front end 40F of the recovery tank 40. In this embodiment, the top end 30T of the supply tank 30, the top end 20T of the printing tank 20 and the top end 40T of the recovery tank 40 are flush with each other, and are located above the top surface 10A of the housing 10.

The cleaning member 110 contacts the spreading member 50 to clean the spreading member 50. The cleaning member 110 is formed of an elastically deformable porous material. The cleaning member 110 is, for example, a sponge. As shown in FIG. 1, the cleaning member 110 is provided on the housing 10 so as to be located to the front of the printing tank 20. In this embodiment, the cleaning member 110 is provided on the housing 10 so as to be located to the front of the recovery tank 40. As shown in FIG. 2, the cleaning member 110 extends in the left-right direction Y. A length L3 of the cleaning member 110 in the left-right direction Y is longer than the length L2 of the printing tank 20 in the left-right direction Y. As shown in FIG. 7, a top end 110T of the cleaning member 110 is located above the spreading member 50.

As shown in FIG. 7, the three-dimensional printing device 100 includes a support member 130 supporting the cleaning member 110. The support member 130 extends in the left-right direction Y. The support member 130 is detachably provided on the housing 10. The support member 130 includes a holding portion 131 holding the cleaning member 110 and an accommodation portion 132 capable of accommodating the powdery material 90. The holding portion 131 sandwiches a bottom end of the cleaning member 110 in the scanning direction X to hold the cleaning member 110. The accommodation portion 132 is located to the rear of the holding portion 131. The accommodation portion 132 is located below the spreading member 50 in a state where the cleaning member 110 is in contact with the spreading member 50. A rear end of the accommodation portion 132 is located to the rear of the spreading member 50 in a state where the cleaning member 110 is in contact with the spreading member 50. A portion, of the powdery member 90, that has fallen from the spreading member 50 as a result of the spreading member 50 contacting the cleaning member 110 is accommodated in the accommodation portion 132. On a rear surface of the support member 130, magnets 135 are provided. The support member 130 is provided on the housing 10 by use of a magnetic force. Therefore, the support member 130 is easily detachable from the housing 10.

As shown in FIG. 8, the overall operation of the three-dimensional printing device 100 is controlled by the controller 80. There is no specific limitation on the configuration of the controller 80. The controller 80 is, for example, a microcomputer. There is no specific limitation on the configuration of the hardware of the controller 80. The controller 80 includes, for example, an interface (I/F) receiving printing data and the like from an external device such as a host computer or the like, a central processing unit (CPU) executing commands of a control program, a ROM (read only memory) storing a program to be executed by the CPU, a RAM (random access memory) usable as a working area in which the program is developed, and a storage memory, such as a memory or the like, storing programs and various data. As shown in FIG. 3, the controller 80 is provided in the hosing 10. Note that the controller 80 does not need to be provided in the housing 10. For example, the controller 80 may be a computer or the like provided outside the housing 10. In this case, the controller 80 is communicably connected with the three-dimensional printing device 100 in a wired or wireless manner.

As shown in FIG. 8, the controller 80 is communicably connected with the line heads 62, the first driving motor 27, the second driving motor 37, the first motor 77 and the second motor 52, and controls these components.

As shown in FIG. 8, the controller 80 includes a head controller 81, a movement controller 82, a rotation controller 83, a first table controller 84, and a second table controller 85. Functions of each of the components of the controller 80 are realized by a program. This program is downloaded through the Internet. Note that the program may be read from a storage medium such as a CD, a DVD or the like. The functions of each component of the controller 80 may be realized by, for example, a processor and/or a circuit. Specific functions of each component will be described below.

The head controller 81 controls the line heads 62. The head controller 81 controls the amount of the curing liquid to be discharged through the nozzles of the line heads 62 and the timing at which the curing liquid is to be discharged. The movement controller 82 controls the first motor 77 to move the movable body 70 in the scanning direction X. The movement controller 82 moves the movable body 70 in the scanning direction X to put the spreading member 50 into contact with the cleaning member 110. The rotation controller 83 controls the second motor 52 to rotate the spreading member 50 in the direction of the arrow R in FIG. 3. The rotation controller 83 rotates the spreading member 50 in the direction of the arrow R in FIG. 3 in a state where the spreading member 50 is in contact with the cleaning member 110. The first table controller 84 controls the first driving motor 27 to move the first table 24 in the up-down direction Z. While the three-dimensional printing object 92 is being formed, the first table controller 84 moves the first table 24 only downward. The second table controller 85 controls the second driving motor 37 to move the second table 34 in the up-down direction Z. While the three-dimensional printing object 92 is being formed, the second table controller 85 moves the second table 34 only upward.

As described above, with the three-dimensional printing device 100 according to this embodiment, the first receiving members 121 provided to the left of, and to the right of, the supply tank 30 are located below the top end 30T of the supply tank 30. Therefore, the even if the powdery material 90 flows outside from the supply tank 30 (e.g., leftward or rightward from the supply tank 30) while the spreading member 50 is transporting the powdery material 90, a portion, of the powdery material 90, that is caused to flow outside is received by the first receiving members 121. In addition, the first receiving members 121 are detachably provided on the housing 10. Therefore, when a certain amount of the powdery material 90 accumulates in the first receiving members 121, the first receiving members 121 may be detached from the housing 10 to return the powdery material 90 to the storage space 30A of the supply tank 30. In this manner, the powdery material 90 may be reused.

The three-dimensional printing device 100 according to this embodiment includes the second receiving members 122, which are detachably provided on the housing 10 so as to be located to the left of, and to the right of, the printing tank 20, are located below the top end 20T of the printing tank 20, and receive a portion, of the powdery material 90, that is caused to flow outside from the printing tank 20 while the spreading member 50 is transporting the powdery material 90. According to this embodiment, the second receiving members 122 provided to the left of, and to the right of, the printing tank 20 are located below the top end of the printing tank 20. Therefore, even if the powdery material 90 flows outside from the printing tank 20 (e.g., leftward or rightward from the printing tank 20) while the spreading member 50 is transporting the powdery material 90, a portion, of the powdery material 90, that is caused to flow outside is received by the second receiving members 122. In addition, the second receiving members 122 are detachably provided on the housing 10. Therefore, when a certain amount of the powdery material 90 accumulates in the second receiving members 122, the second receiving members 122 may be detached from the housing 10 to return the powdery material 90 to the storage space 30A of the supply tank 30. In this manner, the powdery material 90 may be reused.

In the three-dimensional printing device 100 according to this embodiment, each first receiving member 121 and the corresponding second receiving member 122 are formed integrally with each other. According to this embodiment, the powdery material 90 may be received more certainly.

The three-dimensional printing device 100 according to this embodiment includes the recovery tank 40, which is provided in the housing 10 so as to be located to the front of the printing tank 20 and includes the recovery space 40A, to which the powdery material 90 is to be recovered. The three-dimensional printing device 100 also includes the third receiving members 123, which are detachably provided on the housing 10 so as to be located to the left of, and to the right of, the recovery tank 40, are located below the top end 40T of the recovery tank 40, and receive a portion, of the powdery material 90, that is caused to flow outside from the recovery tank 40 while the spreading member 50 is transporting the powdery material 90. According to the above-described embodiment, the third receiving members 123 provided to the left of, and to the right of, the recovery tank 40 are located below the top end of the recovery tank 40. Therefore, even if the powdery material 90 flows outside from the recovery tank 40 (e.g., leftward or rightward from the recovery tank 40) while the spreading member 50 is transporting the powdery material 90, a portion, of the powdery material 90, that is caused to flow outside is received by the third receiving members 123. In addition, the third receiving members 123 are detachably provided on the housing 10. Therefore, when a certain amount of the powdery material 90 accumulates in the third receiving members 123, the third receiving members 123 may be detached from the housing 10 to return the powdery material 90 to the storage space 30A of the supply tank 30. In this manner, the powdery material 90 may be reused.

In the three-dimensional printing device 100 according to this embodiment, each first receiving member 121, the corresponding second receiving member 122 and the corresponding third receiving member 123 are formed integrally with each other. According to this embodiment, the powdery material 90 may be received more certainly.

In the three-dimensional printing device 100 according to this embodiment, the first receiving members 121 are provided on the housing 10 by use of a magnetic force. According to this embodiment, the first receiving members 121 may be detached from the housing 10 easily.

In the three-dimensional printing device 100 according to this embodiment, the second receiving members 122 are provided on the housing 10 by use of a magnetic force. According to this embodiment, the second receiving members 122 may be detached from the housing 10 easily.

In the three-dimensional printing device 100 according to this embodiment, the third receiving members 123 are provided on the housing 10 by use of a magnetic force. According to this embodiment, the third receiving members 123 may be detached from the housing 10 easily.

In the three-dimensional printing device 100 according to this embodiment, the spreading member 50 extends in the left-right direction Y. While the spreading member 50 is transporting the powdery material 90, the left end and the right end of the spreading member 50 pass above the first receiving members 121. According to this embodiment, the spreading member 50 may transport the powdery material 90 stored in the supply tank 30 to the printing space 20A efficiently, but the powdery material 90 easily flows outside from the supply tank 30. However, the first receiving members 121 are provided to the left of, and to the right of, the supply tank 30. Therefore, the powdery material 90, even if flowing outside from the supply tank 30, may be reused. Thus, the powdery material 90 is not wasted.

The three-dimensional printing device 100 according to this embodiment includes the gap burying member 126, which is elastically deformable, is located between the supply tank 30 and each first receiving member 121 to bury the gap between the supply tank 30 and the each first receiving member 121. According to this embodiment, a portion, of the powdery material 90, that is caused to flow outside from the supply tank 30 may be recovered to the first receiving members 121 more certainly.

Preferred embodiments of the present invention are described above. The above-described embodiments are merely examples, and the present invention may be carried out in any of various other embodiments.

In the above-described embodiment, the receiving members 120 each include the first receiving member 121, the second receiving member 122 and the third receiving member 123. The present invention is not limited to this. The receiving members 120 may each include only the first receiving member 121. Alternatively, the receiving members 120 may each include only the first receiving member 121 and the second receiving member 122. In this case, the first receiving member 121 and the second receiving member 122 are, for example, formed integrally with each other. The receiving members 120 may each be equally divided into two in the scanning direction X.

### Reference Signs List

- 10: Housing
- 20: Printing tank
- 20A: Printing space
- 30: Supply tank
- 30A: Storage space
- 40: Recovery tank
- 40A: Recovery space
- 50: Spreading member
- 90: Powdery material
- 92: Three-dimensional printing object
- 100: Three-dimensional printing device
- 120: Receiving member
- 121: First receiving member
- 122: Second receiving member
- 123: Third receiving member
- 126: Gap burying member

## Claims

1. A three-dimensional printing device forming a three-dimensional printing object by curing a powdery material to form a cured layer and sequentially stacking such cured layers, the three-dimensional printing device comprising:
a housing;
a printing tank including a printing space in which the powdery material is to be accommodated and the three-dimensional printing object is to be formed, the printing tank being provided in the housing;
a supply tank provided in the housing so as to be located on one side in a first direction with respect to the printing tank, the supply tank including a storage space in which the powdery material, to be supplied to the printing space, is to be stored;
a spreading member transporting the powdery material from the supply tank to the printing tank and spreading the powdery material in the printing space; and
first receiving members detachably provided on the housing so as to be located on one side and on the other side, with respect to the supply tank, in a second direction perpendicular to the first direction as seen in a plan view, and located below a top end of the supply tank, the first receiving members receiving a portion, of the powdery material, that is caused to flow outside from the supply tank while the spreading member is transporting the powdery material.

2. The three-dimensional printing device of claim 1, further comprising second receiving members detachably provided on the housing so as to be located on the one side and the other side in the second direction with respect to the printing tank and located below a top end of the printing tank, the second receiving members receiving a portion, of the powdery material, that is caused to flow outside from the printing tank while the spreading member is transporting the powdery material.

3. The three-dimensional printing device of claim 2, wherein each of the first receiving members and one of the second receiving members corresponding to the each first receiving member are formed integrally with each other.

4. The three-dimensional printing device of claim 2 or 3, further comprising:
a recovery tank provided in the housing so as to be located on the other side in the first direction with respect to the printing tank, the recovery tank including a recovery space to which the powdery material is to be recovered; and
third receiving members detachably provided on the housing so as to be located on the one side and the other side in the second direction with respect to the recovery tank and located below a top end of the recovery tank, the third receiving members receiving a portion, of the powdery material, that is caused to flow outside from the recovery tank while the spreading member is transporting the powdery material..

5. The three-dimensional printing device of claim 4, wherein each of the first receiving members, one of the second receiving members corresponding to the each first receiving member, and one of the third receiving members corresponding to the each first receiving member are formed integrally with each other.

6. The three-dimensional printing device of claim 1 or 2, wherein the first receiving members are provided on the housing by use of a magnetic force.

7. The three-dimensional printing device of claim 2 or 3, wherein the second receiving members are provided on the housing by use of a magnetic force.

8. The three-dimensional printing device of claim 4, wherein the third receiving members are provided on the housing by use of a magnetic force.

9. The three-dimensional printing device of claim 1 or 2, wherein:
the spreading member extends in the second direction, and
while the spreading member is transporting the powdery material, both of two ends of the spreading member pass above the first receiving members.

10. The three-dimensional printing device of claim 1 or 2, further comprising an elastically deformable gap burying member located between the supply tank and each of the first receiving members to bury a gap between the supply tank and the each first receiving member.
